# EUROPEAN PATENT APPLICATION

(11) **EP 4 108 707 A1**
(43) Date of publication of application: **28.12.2022**
(21) Application number: 20919984.3
(22) Date of filing: 16.12.2020
(51) Int. Cl.: C08G 77/48, B60C 1/00, C08L 9/00, C08L 83/14

(54) **ORGANOPOLYSILOXANE, RUBBER COMPOSITION, AND TIRE**

(30) Priority: 18.02.2020 JP 2020024945
(71) Applicant: Shin-Etsu Chemical Co., Ltd., Tokyo 100-0005 (JP)
(72) Inventor: HIROKAMI, Munenao, Annaka-shi, Gunma 379-0224 (JP)
(74) Representative: Mewburn Ellis LLP
(86) International application number: PCT/JP2020/046849
(87) International publication number: WO 2021/166396

(57) **Abstract**

An organopolysiloxane represented by average empirical formula (1), which gives a rubber composition that renders desired fuel-saving tires possible, the tires being excellent in terms of hardness, tensile property, rolling resistance, and wet gripping.

Formula (1): (R¹)ₐ(R²)_{b}(OR³)_{c}(R⁴)_{d}SiO_{(4-2a-b-c-d)/2}

(In the formula, the R¹ moieties each independently represent a divalent organic group containing a sulfide group, the R² moieties each independently represent an aryl group having 6-10 carbon atoms or an aralkyl group having 7-10 carbon atoms, the R³ moieties each independently represent a hydrogen atom, an alkyl group having 1-20 carbon atoms, an aryl group having 6-10 carbon atoms, an aralkyl group having 7-10 carbon atoms, or an alkenyl group having 2-10 carbon atoms, the R⁴ moieties each independently represent an alkyl group having 1-12 carbon atoms, and a, b, c, and d indicate numbers satisfying 0 < 2a < 1, 0 < b < 1, 0 < c < 3, 0 < d < 1, and 0 < 2a+b+c+d < 4.)

## Description

### TECHNICAL FIELD

This invention relates to an organopolysiloxane, a rubber composition and a tire. More particularly, the invention relates to a novel organopolysiloxane which includes a sulfide group-containing organic group and an aryl group or aralkyl group, and to a rubber composition and a tire containing the organopolysiloxane.

### BACKGROUND ART

Sulfur-containing organosilicon compounds are useful as essential ingredients in the manufacture of tires made from silica-filled rubber compositions. Silica-filled tires have an excellent performance in automotive applications; in particular, the wear resistance, rolling resistance and wet grip are outstanding. Improvements in these performances are closely associated with increased tire fuel efficiency and so are under active investigation lately.

Increasing the silica loading of the rubber composition is essential for improving fuel efficiency. Silica-filled rubber compositions reduce the tire rolling resistance and improve the wet grip, but they have a high viscosity when unvulcanized and thus require multi-stage milling, which is a drawback in terms of workability. Hence, in rubber compositions where an inorganic filler such as silica has simply been blended in, dispersion of the filler is inadequate, leading to major decreases in fracture strength and wear resistance.

Sulfur-containing organosilicon compounds have been essential for improving the dispersibility of inorganic fillers in rubber and also for inducing the inorganic fillers to chemically bond with the rubber matrix.

Compounds which include an alkoxysilyl group and a polysulfide silyl group in the molecule, such as bis(triethoxysilylpropyl)tetrasulfide and bis(triethoxysilylpropyl)disulfide, are known to be effective as sulfur-containing organosilicon compounds (see Patent Documents 1 to 4).

In addition to such polysulfide group-containing organosilicon compounds, use of the following is also known: thioester-type organosilicon compounds containing a capped mercapto group which are advantageous for dispersibility of the silica, and sulfur-containing organosilicon compounds of a type obtained by transesterification of an amino alcohol compound to a hydrolyzable silyl group moiety which are advantageous for miscibility with silica due to hydrogen bonding (see Patent Documents 5 to 9).

However, even with the use of the sulfur-containing organosilicon compounds disclosed in the above-mentioned patent literature, rubber compositions for tires that provide the desired fuel efficiency have yet to be achieved. In addition, there remain various challenges with these sulfur-containing organosilicon compounds; for example, such compounds are more costly than sulfide compounds, in addition to which the production process is complex, leading to problems with productivity.

Patent Documents 10 and 11 disclose examples in which polysiloxanes having polysulfide groups and long-chain alkyl groups are used. When these polysiloxanes are used, the rolling resistance and wet grip are improved, but the hardness and tensile properties end up decreasing, and so rubber compositions for tires that provide the desired fuel efficiency have yet to be achieved.

### PRIOR ART DOCUMENTS

### PATENT DOCUMENTS

Patent Document 1: JP-A 2004-525230
Patent Document 2: JP-A 2004-18511
Patent Document 3: JP-A 2002-145890
Patent Document 4: U.S. Pat. No. 6,229,036
Patent Document 5: JP-A 2005-8639
Patent Document 6: JP-A 2008-150546
Patent Document 7: JP-A 2010-132604
Patent Document 8: JP No. 4571125
Patent Document 9: U.S. Pat. No. 6,414,061
Patent Document 10: JP No. 5574063
Patent Document 11: JP No. 6384338

### SUMMARY OF INVENTION

### TECHNICAL PROBLEM

The present invention was arrived at in light of the above circumstances. An object of the invention is to provide an organopolysiloxane that gives a rubber composition which is endowed with excellent hardness, tensile properties, rolling resistance and wet grip, and which is capable of achieving a tire having the desired fuel efficiency. Another object is to provide a rubber composition that includes this organopolysiloxane.

### SOLUTION TO PROBLEM

The inventor has conducted intensive investigations aimed at achieving the above objects and discovered as a result that an organopolysiloxane having a sulfide group-containing organic group, an aryl group or aralkyl group and a hydrolyzable group and/or hydroxyl group, when added to a rubber composition, can improve the rolling resistance and wet grip of the cured composition without lowering its hardness and tensile properties. The inventor has also found that the desired fuel-efficient tire properties can be achieved with this rubber composition.

Accordingly, this invention provides:
1. An organopolysiloxane of the following average empirical formula (1)

   (R¹)ₐ(R²)_{b}(OR³)_{c}(R⁴)_{d}SiO_{(4-2a-b-c-d)/2} (1)

   (wherein each R¹ is independently a sulfide group-containing divalent organic group; each R² is independently an aryl group of 6 to 10 carbon atoms or an aralkyl group of 7 to 10 carbon atoms; each R³ is independently a hydrogen atom, an alkyl group of 1 to 20 carbon atoms, an aryl group of 6 to 10 carbon atoms, an aralkyl group of 7 to 10 carbon atoms or an alkenyl group of 2 to 10 carbon atoms; each R⁴ is independently an alkyl group of 1 to 12 carbon atoms; and a, b, c and d are numbers which satisfy the conditions 0 < 2a < 1, 0 < b < 1, 0< c< 3, 0 ≤ d < 1 and 0 < 2a+b+c+d < 4);
2. The organopolysiloxane of 1 above, wherein R¹ is a sulfide group-containing divalent organic group of average formula (2) below

   [Chem. 1] ----(CH₂)ₙ-Sₓ-(CH₂)ₙ---- (2)

   (wherein each n is independently a number from 1 to 10, x is a number from 1 to 6, and a dashed line represents a bond);
3. The organopolysiloxane of 1 or 2 above, wherein R² is a phenyl group;
4. The organopolysiloxane of any of 1 to 3 above, wherein d is a number that satisfies the condition 0 < d < 1;
5. The organopolysiloxane of any of 1 to 4 above, wherein R⁴ is an alkyl group of 6 to 12 carbon atoms;
6. A rubber composition which includes the organopolysiloxane of any of 1 to 5 above;
7. The rubber composition of 6 above, further including a diene rubber and a filler;
8. A tire obtained by molding the rubber composition of 6 or 7 above;
9. A cured product of the rubber composition of 6 or 7 above; and
10. A tire which employs the cured product of 9 above.

### ADVANTAGEOUS EFFECTS OF INVENTION

The organopolysiloxane of the invention has a sulfide group-containing organic group, an aryl group-containing organic group and a hydrolyzable group and/or hydroxyl group. Tires formed using a rubber composition containing this organopolysiloxane as a rubber compounding ingredient are capable of satisfying the desired fuel-efficient tire properties.

### DESCRIPTION OF EMBODIMENTS

The invention is described in detail below.

### [1] Organopolysiloxane

The organopolysiloxane of the invention is represented by the following average empirical formula (1).

(R¹)ₐ(R²)_{b}(OR³)_{c}(R⁴)_{d}SiO_{(4-2a-b-c-d)/2} (1)

In formula (1), each R¹ is independently a sulfide group-containing divalent organic group.

This organic group is exemplified by alkylene groups, arylene groups and alkylene groups. Alkylene groups of from 2 to 20 carbon atoms are preferred. Those of average formula (2) below are more preferred

[Chem. 2] ----(CH₂)ₙ-Sₓ-(CH₂)ₙ---- (2)

In this formula, each n is independently a number from 1 to 10, preferably from 1 to 5; x is a number from 1 to 6, preferably from 2 to 4; and a dashed line represents a bond.

Specific, non-limiting, examples of the sulfide group-containing divalent organic group of formula (2) include groups of the following formulas.

[Chem. 3] -----CH₂-S₂-CH₂------C₂H₄-S₂-C₂H₄------C₃H₆-S₂-C₃H₆------C₈H₁₆-S₂-C₈H₁₆------CH₂-S₄-CH₂------C₂H₄-S₄-C₂H₄------C₃H₆-S₄-C₃H₆------C₈H₁₆-S₄-C₈H₁₆---

(wherein a dotted line represents a bond).

Each R² is independently an aryl group of 6 to 10 carbon atoms or an aralkyl group of 7 to 10 carbon atoms.

Specific examples of aryl groups of 6 to 10 carbon atoms include phenyl, tolyl, xylyl and naphthyl groups.

Specific examples of aralkyl groups of 7 to 10 carbon atoms include phenylmethyl (benzyl) and phenylethyl groups.

Of these, a phenyl group is preferred as R².

Each R³ is independently a hydrogen atom, an alkyl group of 1 to 20 carbon atoms, an aryl group of 6 to 10 carbon atoms, an aralkyl group of 7 to 10 carbon atoms or an alkenyl group of 2 to 10 carbon atoms.

Specific examples of alkyl groups of 1 to 20 carbon atoms include methyl, ethyl, n-propyl, n-butyl, n-hexyl, n-octyl, n-decyl and octadecyl groups.

Specific examples of alkenyl groups of 2 to 10 carbon atoms include vinyl, propenyl and pentenyl groups.

The aryl groups of 6 to 10 carbon atoms and aralkyl groups of 7 to 10 carbon atoms are exemplified in the same way as the groups mentioned above for R².

Of these, R³ is preferably a hydrogen atom, a methyl group or an ethyl group, and is more preferably an ethyl group. The proportion of all occurrences of R³ that are hydrogen atoms is preferably from 0 to 30 mol%, and more preferably from 0 to 10 mol%.

Each R⁴ is independently an alkyl group of 1 to 12 carbon atoms. Specific examples include, of the alkyl groups of 1 to 20 carbon atoms mentioned above for R³, those having from 1 to 12 carbon atoms.

Of these, to improve the processability by lowering the viscosity of the rubber composition, and to also further increase the fuel efficiency, R⁴ is preferably an alkyl group of from 6 to 12 carbon atoms.

The subscripts a, b, c and d, which denote the average number of moles of the respective organic groups when the total number of moles of silicon atoms is 1 (unity), are numbers which satisfy the conditions 0 < 2a < 1, 0 < b < 1, 0 < c < 3, 0 ≤ d < 1 and 0 < 2a+b+c+d < 4; preferably numbers which satisfy the conditions 0.2 ≤ 2a ≤ 0.95, 0.05 ≤ b ≤ 0.8, 1 ≤ c ≤ 2.5, 0 ≤ d ≤ 0.6 and 1.3 ≤ 2a+b+c+d < 4); and more preferably numbers which satisfy the conditions 0.3 ≤ 2a ≤ 0.80, 0.05 ≤ b ≤ 0.6, 1 ≤ c ≤ 2.5, 0.05 ≤ d ≤ 0.5 and 1.5 ≤ 2a+b+c+d < 4.

In this invention, the organopolysiloxane has a kinematic viscosity at 25°C, as measured with a capillary-type kinematic viscometer, which from the standpoint of the processability is preferably from 2 to 10,000 mm²/s, and more preferably from 10 to 5,000 mm²/s

The organopolysiloxane of the invention can be produced by, for example, the co-hydrolytic condensation of an organosilicon compound of general formula (3) below, an organosilicon compound of general formula (4) below and, if necessary, an organosilicon compound of general formula (5) below: 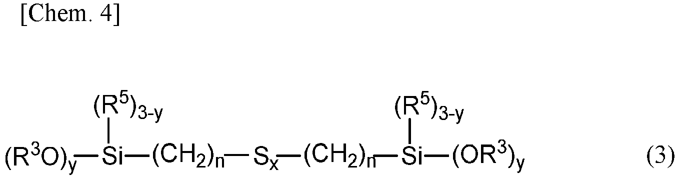 (wherein R³, n and x are as defined above; each R⁵ is independently an alkyl group of 1 to 12 carbon atoms, an aryl group of 6 to 10 carbon atoms or an aralkyl group of 7 to 10 carbon atoms; and y is an integer from 1 to 3, and preferably 2 or 3.) 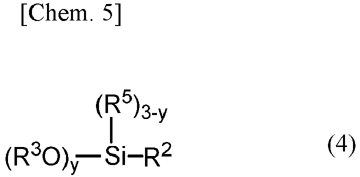 (wherein R², R³, R⁵ and y are as defined above.) 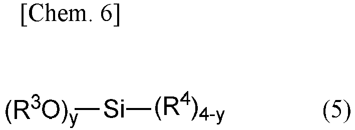 (wherein R³, R⁴ and y are as defined above.)

The alkyl groups of 1 to 12 carbon atoms, aryl groups of 6 to 10 carbon atoms and aralkyl groups of 7 to 10 carbon atoms represented by R⁵ are exemplified by the same groups as mentioned above for R² and R⁴. Of these, R⁵ is preferably an alkyl group of 1 to 3 carbon atoms, and more preferably a methyl group.

Specific examples of the organosilicon compound of formula (3) above include bis(trimethoxysilylpropyl)tetrasulfide, bis(triethoxysilylpropyl)tetrasulfide, bis(trimethoxysilylpropyl)disulfide and bis(triethoxysilylpropyl)disulfide.

Specific examples of the organosilicon compounds represented by formula (4) above include phenyltriethoxysilane, phenyltrimethoxysilane, phenyldiethoxymethylsilane and phenyldimethoxymethylsilane.

Specific examples of the organosilicon compounds represented by formula (5) above include methyltriethoxysilane, methylethyldiethoxysilane, propyltriethoxysilane, propylmethyldiethoxysilane, hexyltriethoxysilane, octyltriethoxysilane and decyltriethoxysilane.

Here, the organosilicon compounds of above formulas (3), (4) and (5) are used in amounts selected so that, in above formula (1), the subscripts a to d become the above-mentioned numbers. Relative to the overall amount of the organosilicon compounds of formulas (3), (4) and (5), the amount of organosilicon compound of formula (3) is preferably from 20 to 95 mol%, and more preferably from 20 to 90 mol%; the amount of the organosilicon compound of formula (4) is preferably from 5 to 80 mol%, more preferably from 5 to 70 mol%, and even more preferably from 5 to 60 mol%; and the amount of the organosilicon compound of formula (5) is preferably from 0 to 60 mol%, and more preferably from 5 to 50 mol%.

Co-hydrolytic condensation may be carried out by a known method. The amount of water used may be a known amount, and is generally from 0.3 to 0.99 mole, and preferably from 0.4 to 0.8 mole, per mole of the total amount of hydrolyzable silyl groups in the organosilicon compound.

An organic solvent may be optionally used in producing the organopolysiloxane of the invention.

Specific examples of the organic solvent include aliphatic hydrocarbon solvents such as pentane, hexane, heptane and decane; ether solvents such as diethyl ether, tetrahydrofuran and 1,4-dioxane; amide solvents such as formamide, dimethylformamide and N-methylpyrrolidone; aromatic hydrocarbon solvents such as benzene, toluene and xylene; and alcohol solvents such as methanol, ethanol and propanol.

Of these, for an excellent hydrolytic reactivity, ethanol and i-propanol are preferred. When such a solvent is used, the amount of use, although not particularly limited, is preferably up to about twice the weight of the organosilicon compound, and more preferably up to about the same weight as the organosilicon compound.

A catalyst may be optionally used in production of the inventive organopolysiloxane.

Specific examples of the catalyst include acidic catalysts such as hydrochloric acid and acetic acid; Lewis acid catalysts such as tetrabutyl orthotitanate and ammonium fluoride; alkali metal salts such as sodium hydroxide, potassium hydroxide, sodium carbonate, sodium acetate, potassium acetate, sodium bicarbonate, potassium carbonate, potassium bicarbonate, calcium carbonate, sodium methoxide and sodium ethoxide; and amine compounds such as triethylamine, tributylamine, pyridine and 4-dimethylaminopyridine.

The catalyst used for the silane hydrolysis reaction (and/or partial condensation) may be, for example, hydrochloric acid; the catalyst used for silanol condensation (oligomerization) may be, for example, potassium hydroxide.

For a good reactivity, the amount of catalyst (when a catalyst for silane hydrolysis and a catalyst for silanol condensation are used together, the amount of each) is preferably from 0.001 to 0.05 (unit: molar equivalent) per mole of the total amount of hydrolyzable silyl groups in the organosilicon compound.

The reaction conditions for co-hydrolytic condensation are generally between 20 and 100°C, preferably between 60 and 85°C, and generally from 30 minutes to 20 hours, and preferably from 1 minute to 10 hours.

### [2] Rubber Composition

The rubber composition of the invention includes (A) the organopolysiloxane of above formula (1), and may also include (B) a diene rubber and (C) a filler.

Taking into account, for example, the properties of the resulting rubber and the balance between the degree of the advantageous effects exhibited and the cost effectiveness, the content of the organopolysiloxane (A) of above formula (1) is preferably from 3 to 20 parts by weight, and more preferably from 5 to 12 parts by weight, per 100 parts by weight of the subsequently described filler (C).

Any rubber that has hitherto been commonly used in various types of rubber compositions may be used as the diene rubber (B). Specific examples include natural rubber (NR), various isoprene rubbers (IR), various styrene-butadiene copolymer rubbers (SBR), various polybutadiene rubbers (BR) and acrylonitrile-butadiene copolymer rubber (NBR). These may be of one type used alone, or two or more may be used in admixture. In addition to diene rubbers, non-diene rubbers such as butyl rubber (IIR), ethylene-propylene copolymer rubbers (EPR, EPDM) and the like may be concomitantly used.

Examples of fillers (C) include silica, talc, clay, aluminum hydroxide, magnesium hydroxide, calcium carbonate and titanium oxide. Of these, silica is preferred. Using the rubber composition of the invention as a silica-containing rubber composition is more preferred.

In this case, taking into account, for example, the properties of the resulting rubber and the balance between the degree of the advantageous effects exhibited and the cost effectiveness, the content of the filler (C) is preferably from 5 to 200 parts by weight, and more preferably from 30 to 120 parts by weight, per 100 parts by weight of the diene rubber.

In addition to above components (A) to (C), the rubber composition of the invention may also include various additives that are commonly included for tire and other general rubber applications, such as carbon black, vulcanizers, crosslinking agents, vulcanization accelerators, crosslink accelerators, various types of oils, antidegradants and plasticizers. These additives may be included in amounts that are commonly used in the art, so long as doing so is consistent with the objects of the invention.

The rubber composition of the invention can be obtained in the usual manner by adding the organopolysiloxane (A), filler (C) and other ingredients to the diene rubber (B) and kneading.

### [3] Rubber Product (Tire)

The rubber composition of the invention can be prepared from above components (A) to (C) and other ingredients by an ordinary process, and can then be used in the production of vulcanized or crosslinked rubber products such as tires. In particular, when producing tires, it is preferable for the rubber composition of the invention to be used in the tire treads.

Tires obtained using the rubber composition of the invention have a greatly reduced rolling resistance, in addition to which the wear resistance is markedly improved, thus enabling the desired fuel efficiency to be achieved.

The construction of the tire may be a commonly known construction, and the production process may be a commonly known process. When the tire is a pneumatic tire, ordinary air, air having a controlled oxygen partial pressure, or an inert gas such as nitrogen, argon or helium may be used as the air that fills the interior of the tire.

### EXAMPLES

The invention is illustrated more fully below by way of Examples and Comparative Examples, although the invention is not limited by these Examples. All references to "parts" in the following Examples are by weight. Viscosities are values measured at 25°C using a capillary-type kinematic viscometer.

### [1] Synthesis of Organopolysiloxane

### [Example 1-1]

A one-liter separable flask equipped with a stirrer, a reflux condenser, a dropping funnel and a thermometer was charged with 539 g (1.0 mol) of bis(triethoxysilylpropyl)tetrasulfide (KBE-846, from Shin-Etsu Chemical Co., Ltd.), 192 g (0.8 mol) of phenyltriethoxysilane (KBE-103, from Shin-Etsu Chemical Co., Ltd.) and 200 g of ethanol, following which 25.2 g (1.4 mol) of 0.5N aqueous hydrochloric acid was added dropwise at room temperature. The flask contents were then stirred at 80°C for 10 hours, following which 3.0 g of propylene oxide was added dropwise and stirring at 80°C was continued for 2 hours. The system was then concentrated in vacuo and filtered, giving a clear brown liquid having a viscosity of 240 mm²/s. The resulting organopolysiloxane was a product of the following average empirical formula.

(-C₃H₆-S₄-C₃H₆-)_{0.36}(-C₆H₅)_{0.28}(-OC₂H₅)_{2.00}SiO_{0.50}

### [Example 1-2]

A one-liter separable flask equipped with a stirrer, a reflux condenser, a dropping funnel and a thermometer was charged with 539 g (1.0 mol) of bis(triethoxysilylpropyl)tetrasulfide (KBE-846, from Shin-Etsu Chemical Co., Ltd.), 96 g (0.4 mol) of phenyltriethoxysilane (KBE-103, from Shin-Etsu Chemical Co., Ltd.), 83 g (0.4 mol) of propyltriethoxysilane (KBE-3033, from Shin-Etsu Chemical Co., Ltd.) and 200 g of ethanol, following which 25.2 g (1.4 mol) of 0.5N aqueous hydrochloric acid was added dropwise at room temperature. The flask contents were then stirred at 80°C for 10 hours, following which 3.0 g of propylene oxide was added dropwise and stirring at 80°C was continued for 2 hours. The system was then concentrated in vacuo and filtered, giving a clear brown liquid having a viscosity of 150 mm²/s. The resulting organopolysiloxane was a product of the following average empirical formula.

(-C₃H₆-S₄-C₃H₆-)_{0.36}(-C₆H₅)_{0.14}(-C₃H₇)_{0.14}(-OC₂H₅)_{2.00}SiO_{0.50}

### [Example 1-3]

A one-liter separable flask equipped with a stirrer, a reflux condenser, a dropping funnel and a thermometer was charged with 539 g (1.0 mol) of bis(triethoxysilylpropyl)tetrasulfide (KBE-846, from Shin-Etsu Chemical Co., Ltd.), 96 g (0.4 mol) of phenyltriethoxysilane (KBE-103, from Shin-Etsu Chemical Co., Ltd.), 99 g (0.4 mol) of hexyltriethoxysilane (KBE-3063, from Shin-Etsu Chemical Co., Ltd.) and 200 g of ethanol, following which 25.2 g (1.4 mol) of 0.5N aqueous hydrochloric acid was added dropwise at room temperature. The flask contents were then stirred at 80°C for 10 hours, following which 3.0 g of propylene oxide was added dropwise and stirring at 80°C was continued for 2 hours. The system was then concentrated in vacuo and filtered, giving a clear brown liquid having a viscosity of 250 mm²/s. The resulting organopolysiloxane was a product of the following average empirical formula.

(-C₃H₆-S₄-C₃H₆-)_{0.36}(-C₆H₅)_{0.14}(-C₆H₁₃)_{0.14}(-OC₂H₅)_{2.00}SiO_{0.50}

### [Example 1-4]

A one-liter separable flask equipped with a stirrer, a reflux condenser, a dropping funnel and a thermometer was charged with 539 g (1.0 mol) of bis(triethoxysilylpropyl)tetrasulfide (KBE-846, from Shin-Etsu Chemical Co., Ltd.), 96 g (0.4 mol) of phenyltriethoxysilane (KBE-103, from Shin-Etsu Chemical Co., Ltd.), 111 g (0.4 mol) of octyltriethoxysilane (KBE-3083, from Shin-Etsu Chemical Co., Ltd.) and 200 g of ethanol, following which 25.2 g (1.4 mol) of 0.5N aqueous hydrochloric acid was added dropwise at room temperature. The flask contents were then stirred at 80°C for 10 hours, following which 3.0 g of propylene oxide was added dropwise and stirring at 80°C was continued for 2 hours. The system was then concentrated in vacuo and filtered, giving a clear brown liquid having a viscosity of 80 mm²/s. The resulting organopolysiloxane was a product of the following average empirical formula.

(-C₃H₆-S₄-C₃H₆-)_{0.36}(-C₆H₅)_{0.14}(-C₈H₁₇)_{0.14}(-OC₂H₅)_{2.00}SiO_{0.50}

### [Example 1-5]

A one-liter separable flask equipped with a stirrer, a reflux condenser, a dropping funnel and a thermometer was charged with 539 g (1.0 mol) of bis(triethoxysilylpropyl)tetrasulfide (KBE-846, from Shin-Etsu Chemical Co., Ltd.), 48 g (0.2 mol) of phenyltriethoxysilane (KBE-103, from Shin-Etsu Chemical Co., Ltd.), 166 g (0.6 mol) of octyltriethoxysilane (KBE-3083, from Shin-Etsu Chemical Co., Ltd.) and 200 g of ethanol, following which 25.2 g (1.4 mol) of 0.5N aqueous hydrochloric acid was added dropwise at room temperature. The flask contents were then stirred at 80°C for 10 hours, following which 3.0 g of propylene oxide was added dropwise and stirring at 80°C was continued for 2 hours. The system was then concentrated in vacuo and filtered, giving a clear brown liquid having a viscosity of 80 mm²/s. The resulting organopolysiloxane was a product of the following average empirical formula.

(-C₃H₆-S₄-C₃H₆-)_{0.36}(-C₆H₅)_{0.07}(-C₈H₁₇)_{0.21}(-OC₂H₅)_{2.00}SiO_{0.50}

### [Comparative Example 1-1]

A one-liter separable flask equipped with a stirrer, a reflux condenser, a dropping funnel and a thermometer was charged with 539 g (1.0 mol) of bis(triethoxysilylpropyl)tetrasulfide (KBE-846, from Shin-Etsu Chemical Co., Ltd.), 222 g (0.8 mol) of octyltriethoxysilane (KBE-3083, from Shin-Etsu Chemical Co., Ltd.) and 200 g of ethanol, following which 25.2 g (1.4 mol) of 0.5N aqueous hydrochloric acid was added dropwise at room temperature. The flask contents were then stirred at 80°C for 10 hours, following which 3.0 g of propylene oxide was added dropwise and stirring at 80°C was continued for 2 hours. The system was then concentrated in vacuo and filtered, giving a clear brown liquid having a viscosity of 80 mm²/s. The resulting organopolysiloxane was a product of the following average empirical formula.

(-C₃H₆-S₄-C₃H₆-)_{0.36}(-C₈H₁₇)_{0.28}(-OC₂H₅)_{2.00}SiO_{0.50}

### [2] Preparation of Rubber Composition

### [Examples 2-1 to 2-5, Comparative Examples 2-1 and 2-2]

The SBR and BR shown in Table 1 were kneaded for 30 seconds using a four-liter internal mixer (MIXTRON, from Kobe Steel, Ltd.).

Next, the oil ingredient, carbon black, silica, sulfide silane, organopolysiloxanes obtained in the Examples and Comparative Examples, stearic acid, antioxidant and wax shown in Table 1 were added and the internal temperature was raised to 150°C and held at 150°C for 2 minutes, following which the contents of the mixer were discharged. This material was then stretched using rolls. The resulting rubber was again kneaded using an internal mixer (MIXTRON, from Kobe Steel, Ltd.) until the internal temperature reached 140°C and then discharged, following which it was stretched using rolls.

The zinc oxide, vulcanization accelerator and sulfur shown in Table 1 were then added to this rubber and kneading was carried out, giving the rubber composition.

| | |
|---|---|
| SBR: | SLR-4602 (from Trinseo) |
| BR: | BR-01 (from JSR Corporation) |
| Oil: | AC-12 (from Idemitsu Kosan Co., Ltd.) |
| Carbon black: | Seast 3 (Tokai Carbon Co., Ltd.) |
| Silica: | Nipsil AQ (Tosoh Silica Corporation) |
| Sulfide silane: | KBE-846 (Shin-Etsu Chemical Co., Ltd.) |
| Stearic acid: | Industrial grade stearic acid (Kao Corporation) |
| Antioxidant: | Nocrac 6C (Ouchi Shinko Chemical Industries Co., Ltd.) |
| Wax: | Ozoace-0355 (Nippon Seiro Co., Ltd.) |
| Zinc oxide: | Zinc white #3 (Mitsui Mining & Smelting Co., Ltd.) |
| Vulcanization accelerator (a): | Nocceler D (Ouchi Shinko Chemical Industries, Co., Ltd.) |
| Vulcanization accelerator (b): | Nocceler DM-P (Ouchi Shinko Chemical Industries, Co., Ltd.) |
| Vulcanization accelerator (c): | Nocceler CZ-G (Ouchi Shinko Chemical Industries, Co., Ltd.) |
| Sulfur: | 5% oil-treated sulfur (Hosoi Chemical Industry Co., Ltd.) |

The unvulcanized properties and vulcanized properties of the rubber compositions obtained in Examples 2-1 to 2-5 and Comparative Examples 2-1 and 2-2 were measured by the following methods. The results are presented in Tables 1 and 2. For measurement of the vulcanized properties, the resulting rubber composition was pressed (160°C, 10 to 40 minutes) to produce a vulcanized rubber sheet (thickness, 2 mm).

### [Unvulcanized Properties]

### (1) Mooney Viscosity

Measured in accordance with JIS K 6300-1: 2013 after allowing 1 minute for sample to reach thermal equilibrium with viscometer; measurement was carried out for 4 minutes at 130°C. The result is expressed as an index relative to an arbitrary value of 100 for the result obtained in Comparative Example 2-1. A smaller index value indicates a lower Mooney viscosity and thus a better processability.

### [Vulcanized Properties]

### (2) Hardness

Measured in accordance with JIS K 6253-3: 2012 with a durometer (type A). The result is expressed as an index relative to an arbitrary value of 100 for the result obtained in Comparative Example 2-1. A larger index value indicates a higher hardness, which is better.

### (3) Tensile Property

A JIS No. 3 dumbbell-shaped test specimen was die-cut from the rubber composition, a tensile test was carried out on the specimen in accordance with JIS K 6251 at a test rate of 500 mm/min, and the 300% modulus (M₃₀₀) [MPa] was measured at room temperature. The result is expressed as an index relative to an arbitrary value of 100 for the result obtained in Comparative Example 2-1. A larger index value indicates a higher modulus and thus better tensile properties.

### (4) Dynamic Viscoelasticity (Strain Dispersion)

The storage modulus E' (0.5%) at 0.5% strain and the storage modulus E' (3.0%) at 3.0% strain were measured at a temperature of 25°C and a frequency of 55 Hz using a viscoelasticity tester (Metravib), and the value of [E' (0.5%) - E' (3.0%)] was calculated. The test specimen used was a sheet having a thickness of 0.2 cm and a width of 0.5 cm, the clamping interval was set to 2 cm and the initial load was set to 1 N.

The value of [E' (0.5%) - E' (3.0%)] is expressed as an index relative to an arbitrary value of 100 for the result obtained in Comparative Example 2-1. A smaller index value indicates a better silica dispersibility.

### (5) Dynamic Viscoelasticity (Temperature Dispersion)

Measurement was carried out at 1% dynamic strain under tension and a frequency of 55 Hz using a viscoelasticity tester (Metravib). The test specimen used was a sheet having a thickness of 0.2 cm and a width of 0.5 cm, the clamping interval was set to 2 cm and the initial load was set to 1 N.

The tan δ (0°C) and tan δ (60°C) values are expressed as indices relative to an arbitrary value of 100 for the result obtained in Comparative Example 2-1. A larger index value for tan δ (0°C) indicates a better wet grip. A smaller index value for tan δ (60°C) indicates a better rolling resistance.

### (6) Wear Resistance

Testing was carried out using an FPS tester (Ueshima Seisakusho Co., Ltd.) at a sample speed of 200 m/min, a load of 20 N, a road surface temperature of 30°C and a slip ratio of 5%.

The result obtained is expressed as an index relative to an arbitrary value of 100 for the result obtained in Comparative Example 2-1. A larger index value indicates a smaller amount of wear and thus better wear resistance.

**[Table 1]**

| Formulation (pbw) | | | Example | | | | | Comparative Example | |
|---|---|---|---|---|---|---|---|---|---|
| | | | 2-1 | 2-2 | 2-3 | 2-4 | 2-5 | 2-1 | 2-2 |
| (B) SBR | | | 70 | 70 | 70 | 70 | 70 | 70 | 70 |
| (B) BR | | | 30 | 30 | 30 | 30 | 30 | 30 | 30 |
| Oil | | | 30 | 30 | 30 | 30 | 30 | 30 | 30 |
| Carbon black | | | 5 | 5 | 5 | 5 | 5 | 5 | 5 |
| (C) Silica | | | 75 | 75 | 75 | 75 | 75 | 75 | 75 |
| Sulfide silane | | | - | - | - | - | - | 6 | - |
| (A) Organopolysiloxane | | Example 1-1 | 6 | - | - | - | - | - | - |
| | | Example 1-2 | - | 6 | - | - | 2 | - | - |
| | | Example 1-3 | - | - | 6 | - | 2 | - | - |
| | | Example 1-4 | - | - | - | 6 | 1 | - | - |
| | | Example 1-5 | - | - | - | - | 2.5 | - | - |
| | | Comparative Example 1-1 | - | - | - | - | - | - | 6 |
| Stearic acid | | | 2 | 2 | 2 | 2 | 2 | 2 | 2 |
| Antioxidant | | | 2 | 2 | 2 | 2 | 2 | 2 | 2 |
| Wax | | | 1 | 1 | 1 | 1 | 1 | 1 | 1 |
| Zinc oxide | | | 2.5 | 2.5 | 2.5 | 2.5 | 2.5 | 2.5 | 2.5 |
| Vulcanization accelerator (a) | | | 1 | 1 | 1 | 1 | 1 | 1 | 1 |
| Vulcanization accelerator (b) | | | 0.3 | 0.3 | 0.3 | 0.3 | 0.3 | 0.3 | 0.3 |
| Vulcanization accelerator (c) | | | 1.5 | 1.5 | 1.5 | 1.5 | 1.5 | 1.5 | 1.5 |
| Sulfur | | | 2 | 2 | 2 | 2 | 2 | 2 | 2 |

| [Unvulcanized Properties] | | | | | | | | | |
|---|---|---|---|---|---|---|---|---|---|
| | Mooney viscosity | | 105 | 105 | 104 | 99 | 97 | 100 | 98 |

| [Vulcanized Properties] | | | | | | | | | |
|---|---|---|---|---|---|---|---|---|---|
| | Hardness | | 102 | 101 | 100 | 100 | 100 | 100 | 90 |
| | Tensile property M300 | | 104 | 103 | 102 | 101 | 100 | 100 | 90 |
| | Strain dispersion [E' (0.5%) - E' (3.0%)] | | 80 | 80 | 79 | 78 | 80 | 100 | 80 |
| | Dynamic viscoelasticity tan δ (0°C) | | 111 | 112 | 114 | 114 | 114 | 100 | 110 |
| | Dynamic viscoelasticity tan δ (60°C) | | 88 | 87 | 87 | 85 | 85 | 100 | 88 |
| | Wear resistance | | 101 | 100 | 102 | 100 | 100 | 100 | 100 |

As is apparent from Table 1, compared with the vulcanized rubber composition obtained in Comparative Example 1-1, the vulcanized rubber compositions obtained in Examples 2-1 to 2-5 have small strain dispersion [E' (0.5%) - E' (3.0%)] values and excellent silica dispersibility while maintaining hardness and tensile strength. Moreover, the dynamic viscoelasticity tan δ (0°C) values are high and so the wet grip is excellent, and the dynamic viscoelasticity tan δ (60°C) values are low, indicating that the hysteresis loss is small and heat buildup is low.

## Claims

1. An organopolysiloxane of the following average empirical formula (1)
(R¹)ₐ(R²)_{b}(OR³)_{c}(R⁴)_{d}SiO_{(4-2a-b-c-d)/2} (1)
(wherein each R¹ is independently a sulfide group-containing divalent organic group; each R² is independently an aryl group of 6 to 10 carbon atoms or an aralkyl group of 7 to 10 carbon atoms; each R³ is independently a hydrogen atom, an alkyl group of 1 to 20 carbon atoms, an aryl group of 6 to 10 carbon atoms, an aralkyl group of 7 to 10 carbon atoms or an alkenyl group of 2 to 10 carbon atoms; each R⁴ is independently an alkyl group of 1 to 12 carbon atoms; and a, b, c and d are numbers which satisfy the conditions 0 < 2a < 1, 0 < b < 1, 0 < c< 3, 0 ≤ d < 1 and 0 < 2a+b+c+d < 4).

2. The organopolysiloxane of claim 1, wherein R¹ is a sulfide group-containing divalent organic group of average formula (2) below
[Chem. 1] ----(CH₂)ₙ-Sₓ-(CH₂)ₙ---- (2)
(wherein each n is independently a number from 1 to 10, x is a number from 1 to 6, and a dashed line represents a bond).

3. The organopolysiloxane of claim 1 or 2, wherein R² is a phenyl group.

4. The organopolysiloxane of any one of claims 1 to 3, wherein d is a number that satisfies the condition 0 < d < 1.

5. The organopolysiloxane of any one of claims 1 to 4, wherein R⁴ is an alkyl group of 6 to 12 carbon atoms.

6. A rubber composition comprising the organopolysiloxane of any one of claims 1 to 5.

7. The rubber composition of claim 6, further comprising a diene rubber and a filler.

8. A tire obtained by molding the rubber composition of claim 6 or 7.

9. A cured product of the rubber composition of claim 6 or 7.

10. A tire which employs the cured product of claim 9.
